# EUROPÄISCHE PATENTSCHRIFT

(11) **EP 1 538 419 B1**
(45) Veröffentlichungstag und Bekanntmachung des Hinweises auf die Patenterteilung: **18.04.2007**
(21) Anmeldenummer: 04026546.4
(22) Anmeldetag: 09.11.2004
(51) Int. Cl.: G01B 5/207

(54) **Halteblock einer Profilabtastanordnung**
Holder Element of a Profile Measuring Device
Elément de support d'un palpeur profilométrique

(30) Priorität: 05.12.2003 DE 10357007
(43) Veröffentlichungstag der Anmeldung: 08.06.2005
(73) Patentinhaber: Firma STABA-technic Wilhelm Bögle KG, 72770 Reutlingen (DE)
(72) Erfinder: Bögle, Matthias, 72770 Reutlingen (DE)
(74) Vertreter: Kohler Schmid Möbus

(56) Entgegenhaltungen:
- EP-A- 0 212 158
- CH-A- 107 883
- GB-A- 1 277 646

## Beschreibung

Die Erfindung betrifft eine Profilabtastanordnung nach dem Oberbegriff des Anspruchs 1.

Eine derartige Profilabtastanordnung ist beispielsweise durch die GB-A-1 277 646 bekannt geworden.

Die bekannte Profilabtastanordnung weist einen auf einer Grundplatte montierten Stab auf, an dem ein Träger einer Vielzahl von Abtaststäben mittels einer Klemmschraube in beliebigem Winkel und in beliebiger Höhe befestigbar ist. Allerdings ist die Höhenverstellbarkeit durch die Länge des Stabes begrenzt.

Der Anmelder hat sich die Aufgabe gestellt, den mindestens einen Träger mehrerer Abtaststäbe noch vielfältiger, insbesondere in beliebiger Höhe, anordnen zu können.

Diese Aufgabe wird durch einen Halteblock mit den Merkmalen des Anspruchs 1 gelöst. Träger und Halteblöcke können beliebig miteinander kombiniert und zu einer veränderbaren sowie individuell auf das abzutastende Objekt abgestimmten Anordnung zusammengebaut werden.

Die vorgenannten Mittel sind bevorzugt dadurch verwirklicht, dass der Halteblock an einer ersten Seitenfläche mehrere übereinander angeordnete Quernuten aufweist, und dass der Träger an einer Stirnseite einen Quersteg aufweist. Der Träger kann in gewünschter Höhe eingeschoben werden. Dabei sind die Abtaststäbe quer zur Längsrichtung des Halteblocks ausgerichtet. Hierzu alternativ oder ergänzend weist der Halteblock an einer zweiten Seitenfläche mehrere übereinander angeordnete Querstege und der Träger eine Quernut auf.

Wenn der Halteblock an einer dritten Seitenfläche eine Längsnut aufweist, kann der Träger über den Quersteg so eingeschoben werden, dass der Träger und somit die Abtaststäbe in Längsrichtung des Halteblocks und somit quer zur oben erwähnten ersten Anordnung stufenlos höhenverstellbar ausgerichtet werden können. Hierzu alternativ oder ergänzend weist der Halteblock an einer vierten Seitenfläche einen Längssteg auf, um eine Quernut des Trägers aufzuschieben.

Besonders bevorzugt ist es, dass der Halteblock an einer Unterseite einen Quersteg und an einer Oberseite eine Quernut aufweist. Dies erlaubt eine endlose Anordnung in Längsrichtung und auch eine Anordnung quer zur Längsrichtung.

Ein bevorzugtes Ausführungsbeispiel der Erfindung ist in der Zeichnung dargestellt und wird anhand der Figuren der Zeichnung näher erläutert. Die Zeichnung ist schematisch und nicht maßstäblich zu verstehen. Es zeigt:
- **Fig. 1**: eine erste Seitenansicht eines Halteblocks zur Halterung eines Trägers von Abtaststäben;
- **Fig. 2**: eine zweite gegenüber der Ansicht gemäß Fig. 1 um 90° gedrehte Seitenansicht des Halteblocks;
- **Fig. 3**: eine Draufsicht des Halteblocks gemäß Fig. 1;
- **Fig. 4**: eine Seitenansicht zweier Halteblöcke mit einem gehaltertem Träger von Abtaststäben.

Vorab zur nachfolgenden Beschreibung des Ausführungsbeispiels soll erwähnt werden, dass die Erfindung im Wesentlichen mindestens zwei Halteblöcke und mindestens einen Träger mit Abtaststäben umfasst. Erfindungswesentlich ist die Ausbildung von mehreren Quernuten an einer ersten Seitenfläche und einer zentralen Längsnut an einer angrenzenden zweiten Seitenfläche des Halteblocks. Beiden Nuten sind gegenüberliegend entsprechende Querstege und ein zentraler Längssteg angeordnet. Zusätzlich ist jeder Halteblock mit einer Quernut an seiner Oberseite und einem Quersteg an seiner gegenüberliegenden Unterseite versehen. Ebenso weist der Träger an einer Stirnseite einen Quersteg und an der gegenüberliegenden Stirnseite eine Quernut auf. Quer und längs beziehen sich stets auf eine Anordnung quer zur Längsrichtung. Sämtliche Nuten und Stege sind aufeinander abgestimmt, sodass beliebige Kombinationen von Halteblöcken und Trägern möglich sind.

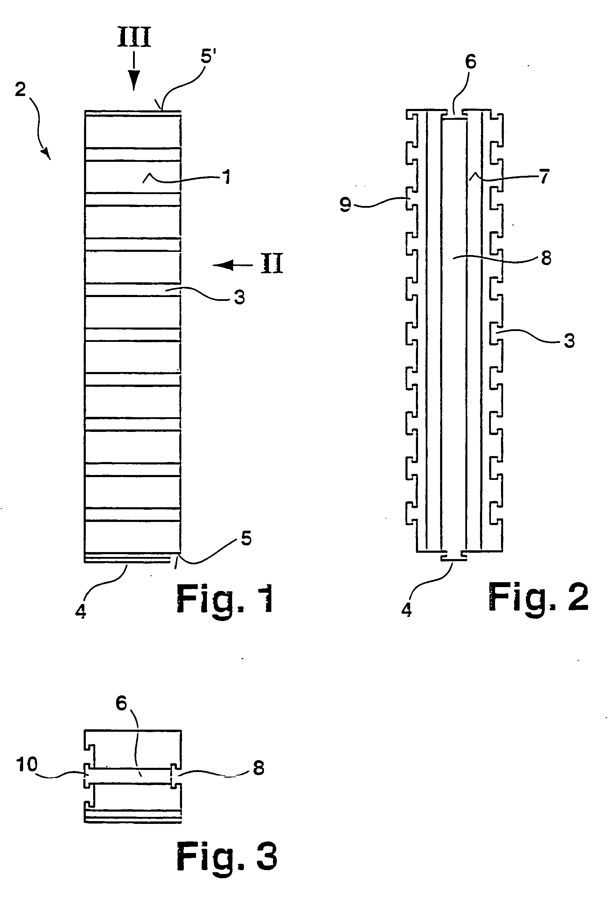

Aus der **Fig.1** ist ersichtlich, dass eine erste Seitenfläche **1** eines Halteblocks **2** mit rechteckigem Querschnitt quer zur Längsrichtung des Halteblocks 2 verlaufende Quernuten **3** aufweist, von denen in der Fig. 1 nur eine mit einer Bezugsziffer 3 gekennzeichnet ist.

Die Quernuten 3 dienen zum Einschieben von Querstegen eines Trägers von Abtaststäben. Je nach Größe des abzutastenden Profilkörpers kann der Quersteg des Trägers in eine entsprechende Quernut 3 eingeschoben werden. Die Quernuten 3 können aber auch zum Einschieben eines Quersteges **4** an der Unterseite **5** des Halteblocks 2 genutzt werden, um zwei Halteblöcke 2 im rechten Winkel zueinander anzuordnen.

Zum endlosen Aneinanderfügen einer beliebigen Anzahl identischer Halteblöcke 2 in Längsrichtung der Halteblöcke 2 weist jeder Halteblock 2 einenends den Quersteg 4 zur Kombination mit einer anderenends an der Oberseite **5**' angeordneten Quernut **6** (siehe Fig. 2) auf, die entsprechend der Form des Querstegs 4 komplementär ausgestaltet ist, damit der Quersteg 4 eingeschoben und möglichst spielfrei fixiert ist. Hierzu sind sowohl der Quersteg 4 als auch die Quernuten 3 und 6 als Gegenstück hinterschnitten ausgeführt.

Der Darstellung gemäß **Fig. 2** ist zu entnehmen, dass eine zweite Seitenfläche **7** eine Längsnut **8** besitzt, die in Längsrichtung des Halteblocks 2 verläuft. Auch die Längsnut 8 ist mit einem Hinterschnitt versehen. In der Fig. 2 ist auch der Hinterschnitt (T-förmiger Querschnitt) der Quernut 6 und des Querstegs 4 sowie der Quernuten 3 zu erkennen. Zum beidseitigen Einschieben des Querstegs 4 fehlt der Hinterschnitt der Längsnut 8 im Bereich der kreuzenden Quernut 6 bzw. im Schnittpunkt der Nuten 6 und 8.

Gegenüberliegend zu den Quernuten 3 sind Querstege **9** mit einem Hinterschnitt angeordnet.

Im Wesentlichen weisen sämtliche Nuten und Stege des Halteblocks 2 und des Trägers durchgehend einen Hinterschnitt auf. **Fig. 3** zeigt, dass der Hinterschnitt der Quernut 6 im Bereich der Längsnut 8 , d. h. im Schnittpunkt der Nuten 6 und 8, fehlt. Dies dient wiederum dem beidseitigen Einschieben des entsprechenden Steges. Gegenüberliegend zur Längsnut 8 ist ein Längssteg **10** angeordnet, welcher in Längsrichtung des Halteblocks 2 verläuft.

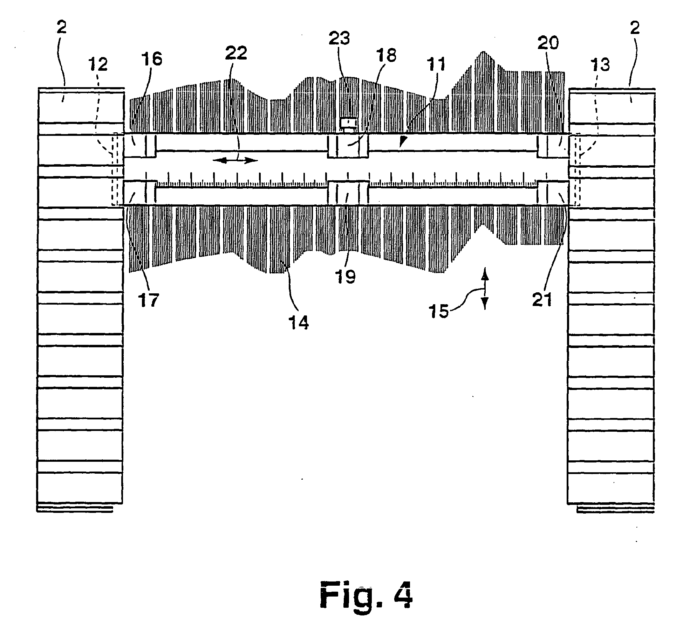

**Fig. 4** zeigt eine mögliche Halterung eines Trägers **11** zwischen zwei Halteblöcken 2. Der Träger 11 besitzt an der einen Stirnseite einen Quersteg **12** zur Kombination mit der Längsnut 8 und an der gegenüberliegenden Stirnseite eine Quernut **13** zur Kombination mit dem Längssteg 10. Der Träger 11 der in Fig. 4 dargestellten Profilabtastanordnung weist mehrere Durchgangsschlitze für die Aufnahme von jeweils mehreren, aus Drahtabschnitten bestehenden Abtaststäben **14** auf. Die Durchgangsschlitze sind alle gleich breit und passend für die Aufnahme einer bestimmten Zahl von Abtaststäben 14 bemessen, beispielsweise für die Aufnahme von elf Abtaststäben. Die Abstaststäbe 14 sind quer zur Längsrichtung des Trägers 11 in Doppelpfeilrichtung **15** verschiebbar angeordnet, um die Kontur eines Profilkörpers abtasten zu können.

Absätze **16** bis **21** übergreifen eine in Doppelpfeilrichtung **22** verschiebbare Skala, welche in einer bestimmten Position durch eine Feststellschraube **23** arretierbar ist.

Alternativ kann der Quersteg 12 auch in eine Quernut 3 eingeschoben bzw. die Quernut 13 auch auf einen Quersteg 9 aufgeschoben werden, so dass die Abtaststäbe 14 aus der Zeichnungsebene herausragen und quer zu der gezeigten Ausrichtung der Abtaststäbe 14 angeordnet werden können. Der abzutastende Profilkörper kann somit leicht von mehreren Seiten erfasst werden.

### Bezugszeichen :

- 1: Seitenfläche
- 2: Halteblock
- 3: Quernut
- 4: Quersteg
- 5: Unterseite
- 5': Oberseite
- 6: Quernut
- 7: Seitenfläche
- 8: Längsnut
- 9: Quersteg
- 10: Längssteg
- 11: Träger
- 12: Quersteg
- 13: Quernut
- 14: Abtaststab
- 15: Doppelpfeil
- 16: Absatz
- 17: Absatz
- 18: Absatz
- 19: Absatz
- 20: Absatz
- 21: Absatz
- 22: Doppelpfeil
- 23: Feststellschraube

## Patentansprüche

1. Halteblock (2) einer Profilabtastanordnung mit mindestens einem Träger (11) mehrerer einzeln verschiebbarer Abtaststäbe (14) und mit Mitteln zur höhenverstellbaren Halterung des Trägers (11) an jeder Seitenfläche (1, 7) des Halteblocks (2), **dadurch gekennzeichnet, dass** der Halteblock (2) Mittel zum Aneinanderfügen einer beliebigen Anzahl identischer Halteblöcke (2) zur endlosen Verlängerung aufweiset.

2. Halteblock nach Anspruch 1, **dadurch gekennzeichnet, dass** der Halteblock (2) an einer ersten Seitenfläche (1) mehrere übereinander angeordnete Quernuten (3) aufweist, und dass der Träger (11) an einer Stirnseite einen Quersteg (12) aufweist.

3. Halteblock nach einem der vorhergehenden Ansprüche, **dadurch gekennzeichnet, dass** der Halteblock (2) an einer zweiten Seitenfläche (7) mehrere übereinander angeordnete Querstege (9) aufweist, und dass der Träger (11) eine Quernut (13) aufweist.

4. Halteblock nach einem der vorhergehenden Ansprüche, **dadurch gekennzeichnet, dass** der Halteblock (2) an einer dritten Seitenfläche eine Längsnut (8) aufweist.

5. Halteblock nach einem der vorhergehenden Ansprüche, **dadurch gekennzeichnet, dass** der Halteblock (2) an einer vierten Seitenfläche einen Längssteg (10) aufweist.

6. Halteblock nach einem der vorhergehenden Ansprüche, **dadurch gekennzeichnet, dass** der Halteblock (2) an einer Unterseite (5) einen Quersteg (4) aufweist.

7. Halteblock nach einem der vorhergehenden Ansprüche, **dadurch gekennzeichnet, dass** der Halteblock (2) an einer Oberseite (5') eine Quernut (6) aufweist.

## Claims

1. Holder element (2) for a profile tracing device having at least one bracket (11) for a plurality of individually displaceable tracing rods (14) and having means for mounting the bracket (11) in a height-adjustable manner on each lateral face (1, 7) of the holder element (2), **characterised in that** the holder element (2) incorporates means for fitting together any desired number of identical holder elements (2) to allow continuous lengthening.

2. Holder element (2) according to claim 1, **characterised in that** on a first lateral face (1) the holder element (2) incorporates a plurality of transverse slots (3) arranged one above the other, and that on one end face the bracket (11) incorporates a transverse land. (12).

3. Holder element according to either one of the preceding claims, **characterised in that** on a second lateral face (7) the holder element (2) incorporates a plurality of transverse lands (9) arranged one above the other, and that the bracket (11) incorporates a transverse slot (13).

4. Holder element according to any one of the preceding claims, **characterised in that** on a third lateral face the holder element (2) incorporates a longitudinal slot (8).

5. Holder element according to any one of the preceding claims, **characterised in that** on a fourth lateral face the holder element (2) incorporates a longitudinal land (10).

6. Holder element according to any one of the preceding claims, **characterised in that** on a lower face (5) the holder element (2) incorporates a transverse land (4).

7. Holder element according to any one of the preceding claims, **characterised in that** on an upper face (5') the holder element (2) incorporates a transverse slot (6).

## Revendications

1. Bloc de retenue (2) d'un agencement de mesure de profilés, avec au moins un support (11) de plusieurs barres de mesure mobiles individuellement (14) et avec des moyens pour retenir le support (11) de manière réglable en hauteur sur chaque surface latérale (1, 7) du bloc de retenue (2), **caractérisé en ce que** le bloc de retenue (2) comporte des moyens pour assembler entre eux un nombre quelconque de blocs de retenue identiques (2) afin de les prolonger à l'infini.

2. Bloc de retenue selon la revendication 1, **caractérisé en ce que** le bloc de retenue (2) comporte, sur une première surface latérale (1), plusieurs rainures transversales superposées (3), et **en ce que** le support (11) comporte, sur un côté frontal, une barrette transversale (12).

3. Bloc de retenue selon une des revendications précédentes, **caractérisé en ce que** le bloc de retenue (2) comporte, sur une deuxième surface latérale (7), plusieurs barrettes transversales superposées (9), et **en ce que** le support (11) comporte une rainure transversale (13).

4. Bloc de retenue selon une des revendications précédentes, **caractérisé en ce que** le bloc de retenue (2) comporte, sur une troisième surface latérale, une rainure longitudinale (8).

5. Bloc de retenue selon une des revendications précédentes, **caractérisé en ce que** le bloc de retenue (2) comporte, sur une quatrième surface latérale, une barrette longitudinale (10).

6. Bloc de retenue selon une des revendications précédentes, **caractérisé en ce que** le bloc de retenue (2) comporte, sur une sous-face (5), une barrette transversale (4).

7. Bloc de retenue selon une des revendications précédentes, **caractérisé en ce que** le bloc de retenue (2) comporte, sur un côté supérieur (5'), une rainure transversale (6).
